# EUROPÄISCHE PATENTANMELDUNG

(11) **EP 2 234 016 A2**
(43) Veröffentlichungstag der Anmeldung: **29.09.2010**
(21) Anmeldenummer: 10155573.8
(22) Anmeldetag: 05.03.2010
(51) Int. Cl.: G06F 9/445

(54) **Softwareupdate für Gerät mit mehreren intelligenten Einrichtungen**

(30) Priorität: 27.03.2009 DE 102009003688
(71) Anmelder: LOEWE OPTA GmbH, 96317 Kronach (DE)
(72) Erfinder: Friedlein, Reinhard, 96317, Kronach (DE)
(74) Vertreter: Kinnstätter, Klaus

(57) **Zusammenfassung**

Ein Gerät (1) weist mehrere intelligente Einrichtungen (2) auf. Im Betrieb führen die intelligenten Einrichtungen (2) des Geräts (1) ihre jeweilige Funktionalität aus und wirken hierbei miteinander zusammen. Für jede intelligente Einrichtung (2) ist deren Funktionalität durch ein jeweiliges Programm (3) bestimmt, das in einem der jeweiligen intelligenten Einrichtung (2) zugeordneten elektrisch lösch- und schreibbaren Festwertspeicher (4) hinterlegt ist. Eine der intelligenten Einrichtungen (2) ist als Zugangseinrichtung (2') ausgebildet, die mit einer Programmierschnittstelle (5) versehen ist, so dass den intelligenten Einrichtungen (2) über die Programmierschnittstelle (5) und die Zugangseinrichtung (2') neue Programme (6) zuführbar sind, welche anstelle der bereits in den Festwertspeichern (4) gespeicherten Programme (3) in die jeweiligen Festwertspeicher (4) eingespeichert werden. Die Zugangseinrichtung (2') ist derart ausgebildet, dass sie über die Programmierschnittstelle (5) als Einheit ein Softwarepaket (7) entgegen nimmt, welches für alle intelligenten Einrichtungen (2) des Geräts (1) jeweils dessen neues Programm (6) enthält, die einzelnen neuen Programme (6) separiert und jedes der neuen Programme (6) an die jeweilige intelligente Einrichtung (2) weiterleitet.

## Beschreibung

Die vorliegende Erfindung betrifft ein Gerät mit mehreren intelligenten Einrichtungen,
- wobei die intelligenten Einrichtungen im Betrieb des Geräts ihre jeweilige Funktionalität ausführen und hierbei miteinander zusammenwirken,
- wobei für jede intelligente Einrichtung deren Funktionalität durch ein jeweiliges Programm bestimmt ist, das in einem der jeweiligen intelligenten Einrichtung zugeordneten elektrisch lösch- und schreibbaren Festwertspeicher hinterlegt ist,
- wobei eine der intelligenten Einrichtungen als Zugangseinrichtung ausgebildet ist, die mit einer Programmierschnittstelle versehen ist, so dass den intelligenten Einrichtungen über die Programmierschnittstelle und die Zugangseinrichtung neue Programme zuführbar sind, welche anstelle der bereits in den Festwertspeichern gespeicherten Programme in die jeweiligen Festwertspeicher eingespeichert werden.

Derartige Geräte sind allgemein bekannt. Sie werden insbesondere in Kraftfahrzeugen und in Geräten der Unterhaltungselektronik eingesetzt. Rein beispielhaft wird für eine Anwendung im Bereich der Kraftfahrzeugelektronik auf die DE 10 2004 052 948 A1 verwiesen.

Moderne Geräte der Unterhaltungselektronik wie beispielsweise Fernsehempfänger, DVD- oder Festplattenrecorder oder Satelliten- oder DVBT-Receiver (mit oder ohne integrierte Festplatte) enthalten in der Regel mehrere Mikroprozessoren und Mikrocontroller mit jeweils zugeordnetem Programmspeicher. In der Regel sind die Programmspeicher als Flash-EPROM ausgebildet. Die in den Flash-EPROMs enthaltenen Programme werden von Zeit zu Zeit aktualisiert.

Bei Kraftfahrzeugen wird zu diesem Zweck beispielsweise über die Programmierschnittstelle eine Programmiereinrichtung an die Zugangseinrichtung angeschlossen, welche die neuen Programme an die einzelnen intelligenten Einrichtungen verteilt. Wenn die Neuprogrammierung der intelligenten Einrichtungen abgeschlossen ist, wird wieder der Normalbetrieb aufgenommen. Im Bereich der Unterhaltungselektronik ist es üblich, dem Gerät über die Zugangseinrichtung nur die neuen Programme als solche zuzuführen. Dies setzt zwar voraus, dass die nötigen Programmierspannungen geräteseitig generiert werden können. Das ist jedoch problemlos möglich.

Wenn die neuen Programme ordnungsgemäß aufeinander abgestimmt sind, bereitet die Vorgehensweise des Standes der Technik keine Probleme. Wenn die neuen Programm jedoch nicht ordnungsgemäß aufeinander abgestimmt sind, kann es bei der Vorgehensweise des Standes der Technik geschehen, dass zwar jede intelligente Einrichtung für sich betrachtet ordnungsgemäß funktioniert, das Zusammenwirken der intelligenten Einrichtungen jedoch gestört ist. Beispielsweise kann eine Schnittstelle nicht mehr bedient werden. Es muss bei der Aktualisierung der Programme daher nicht nur darauf geachtet werden, dass die Programme für sich betrachtet aktualisiert werden. Es muss daher auch darauf geachtet werden, dass die neuen Programme in ihrer Gesamtheit aufeinander abgestimmt sind.

Aus der EP 1 335 283 A2 ist ein Gerät mit mehreren intelligenten Einrichtungen bekannt. Die intelligenten Einrichtungen führen im Betrieb des Geräts ihre jeweilige Funktionalität aus und wirken hierbei miteinander zusammen. Für jede intelligente Einrichtung ist deren Funktionalität zum Teil durch ein jeweiliges Programm bestimmt, das in einem der jeweiligen intelligenten Einrichtung zugeordneten elektrisch lösch- und schreibbaren Festwertspeicher hinterlegt ist. Eine der intelligenten Einrichtungen ist als Zugangseinrichtung ausgebildet, die mit einer Programmierschnittstelle versehen ist, so dass den intelligenten Einrichtungen über die Programmierschnittstelle und die Zugangseinrichtung neue Programme zuführbar sind, welche anstelle der bereits in den Festwertspeichern gespeicherten Programme in die jeweiligen Festwertspeicher eingespeichert werden. Die Zugangseinrichtung der EP 1 335 283 A2 ist derart ausgebildet, dass sie über die Programmierschnittstelle als Einheit ein Softwarepaket entgegen nimmt. Das Softwarepaket enthält für eine der intelligenten Einrichtungen des Geräts (mindestens) zwei miteinander zusammenwirkende Programme. Beide Programme werden - ob zusammen oder separat, geht aus der EP 1 335 283 A2 nicht hervor - an die entsprechende intelligente Einrichtung weitergeleitet. Eines der beiden Programme wird in dem der entsprechenden intelligenten Einrichtung zugeordneten elektrisch lösch- und schreibbaren Festwertspeicher eingespeichert. Das andere Programm wird in einen der entsprechenden intelligenten Einrichtung zugeordneten flüchtigen Speicher eingeschrieben.

Die Aufgabe der vorliegenden Erfindung besteht darin, Möglichkeiten zu schaffen, mittels derer auf einfache Weise gewährleistet werden kann, dass die intelligenten Einrichtungen des Gerätes auch nach einem Softwareupdate ordnungsgemäß zusammenwirken.

Die Aufgabe wird durch ein Gerät mit den Merkmalen des Anspruchs 1 gelöst. Vorteilhafte Ausgestaltungen des erfindungsgemäßen Gerätes sind Gegenstand der abhängigen Ansprüche 2 bis 10.

Erfindungsgemäß ist ein Gerät der eingangs genannten Art dadurch weiter ausgestaltet, dass die Zugangseinrichtung derart ausgebildet ist, dass sie über die Programmierschnittstelle als Einheit ein Softwarepaket entgegen nimmt, welches für alle intelligenten Einrichtungen des Geräts jeweils dessen neues Programm enthält, die einzelnen neuen Programme separiert und jedes der neuen Programme an die jeweilige intelligente Einrichtung weiterleitet.

Durch diese Vorgehensweise wird erreicht, dass dem Gerät nur komplette Softwarepakete zugeführt werden, deren Gesamtkonfiguration vorab geprüft und entsprechend zusammengestellt werden kann.

In einer bevorzugten Ausgestaltung der vorliegenden Erfindung ist vorgesehen, dass das Softwarepaket eine Paketidentifikation enthält, dass geräteintern eine Geräteidentifikation hinterlegt ist und dass die Zugangseinrichtung derart ausgebildet ist, dass sie die Paketidentifikation mit der Geräteidentifikation vergleicht und das Weiterleiten der einzelnen neuen Programme nur bei Übereinstimmen der Paketidentifikation mit der Geräteidentifikation vornimmt.

Dadurch kann erreicht werden, dass nur ein tatsächlich für das betreffende Gerät bestimmtes Softwarepaket eine Aktualisierung der intelligenten Einrichtungen des Gerätes bewirkt.

Weiterhin ist bevorzugt, dass das Softwarepaket einen Paketversionsstand enthält, dass geräteintern ein Geräteversionsstand hinterlegt ist und dass die Zugangseinrichtung derart ausgebildet ist, dass sie den Paketversionsstand mit dem Geräteversionsstand vergleicht und das Weiterleiten der einzelnen neuen Programme nur dann vornimmt, wenn der Paketversionsstand aktueller als der Geräteversionsstand ist, und in diesem Fall weiterhin den Paketversionsstand als neuen Geräteversionsstand übernimmt.

Dadurch wird erreicht, dass nur eine tatsächliche Aktualisierung erfolgen kann, dass also ein älterer Versionsstand nicht einen jüngeren Versionsstand überschreiben kann.

Im Stand der Technik enthält jedes neue Programm eine Programmidentifikation. Weiterhin ist im Stand der Technik geräteintern für jede intelligente Einrichtung eine Einrichtungsidentifikation hinterlegt. Diese Ausgestaltungen können auch bei der vorliegenden Erfindung vorgesehen sein. Sie können auf zwei alternative Weisen genutzt werden. Zum einen ist es möglich, dass die Zugangseinrichtung derart ausgebildet ist, dass sie für jedes neue Programm die Programmidentifikation mit der korrespondierenden Einrichtungsidentifikation vergleicht und das Weiterleiten des jeweiligen neuen Programms an die jeweilige intelligente Einrichtung nur bei Übereinstimmen der jeweiligen Programmidentifikation mit der korrespondierenden Einrichtungsidentifikation vornimmt. Alternativ ist es möglich, dass die intelligenten Einrichtungen derart ausgebildet sind, dass sie zusätzlich zu dem für sie bestimmten jeweiligen neuen Programm oder vorab die jeweilige Programmidentifikation entgegen nehmen und mit der ihnen jeweils zugeordneten Einrichtungsidentifikation vergleichen und das für sie bestimmte jeweilige neue Programm nur bei Übereinstimmen der jeweiligen Programmidentifikation mit der ihnen jeweils zugeordneten Einrichtungsidentifikation in den ihnen jeweils zugeordneten Festwertspeicher einspeichern. Der Unterschied zwischen diesen beiden alternativen Vorgehensweisen besteht darin, dass im einen Fall die Zugangseinrichtung und im anderen Fall die intelligenten Einrichtungen den Vergleich von Programmidentifikation und Einrichtungsidentifikation vornehmen und vergleichsabhängig reagieren.

In analoger Weise enthält im Stand der Technik jedes neue Programm einen Programmversionsstand und ist geräteintern für jede intelligente Einrichtung ein Einrichtungsversionsstand hinterlegt. Auch dieser Sachverhalt kann im Rahmen der vorliegenden Erfindung auf zwei alternative Weisen ausgenutzt werden. Zum einen ist es möglich, dass die Zugangseinrichtung derart ausgebildet ist, dass sie für jedes neue Programm den jeweiligen Programmversionsstand mit dem korrespondierenden Einrichtungsversionsstand vergleicht und das Weiterleiten des jeweiligen neuen Programms an die jeweilige intelligente Einrichtung nur dann vornimmt, wenn der jeweilige Programmversionsstand aktueller als der korrespondierende Einrichtungsversionsstand ist, und in diesem Fall weiterhin den jeweiligen Programmversionsstand als neuen korrespondierenden Einrichtungsversionsstand übernimmt. Zum anderen ist es möglich, dass die intelligenten Einrichtungen derart ausgebildet sind, dass sie zusätzlich zu dem für sie bestimmten jeweiligen neuen Programm oder vorab den jeweiligen Programmversionsstand entgegen nehmen und mit dem jeweils korrespondierenden Einrichtungsversionsstand vergleichen und das für sie bestimmte jeweilige neue Programm nur dann in den ihnen jeweils zugeordneten Festwertspeicher einspeichern, wenn der jeweilige Programmversionsstand aktueller als der korrespondierende Einrichtungsversionsstand ist, und in diesem Fall weiterhin den jeweiligen Programmversionsstand als neuen korrespondierenden Einrichtungsversionsstand übernehmen. Der Unterschied besteht auch hier darin, dass der Vergleich und die vergleichsabhängige Reaktion im einen Fall von der Zugangseinrichtung vorgenommen werden, im anderen Fall von den intelligenten Einrichtungen.

Es ist in Einzelfällen möglich, dass der Vergleich des Versionsstandes von Softwarepaket und Gerät einerseits sowie Programmen und intelligenten Einrichtungen andererseits miteinander kollidiert. Vorzugsweise ist daher in dem Fall, dass die Zugangseinrichtung die Versionsstände von neuen Programmen und intelligenten Einrichtungen miteinander vergleicht, vorgesehen, dass die Zugangseinrichtung derart ausgebildet ist, dass optional einstellbar ist, ob sie den jeweiligen Programmversionsstand mit dem jeweils korrespondierenden Einrichtungsversionsstand vergleicht oder ob sie das Weiterleiten des jeweiligen neuen Programms an die jeweilige intelligente Einrichtung und das Übernehmen des jeweiligen Programmversionsstands stets vornimmt. In analoger Weise können auch die intelligenten Einrichtungen ausgebildet sein.

Das Gerät kann prinzipiell als beliebiges Gerät ausgebildet sein. Insbesondere kann es als Gerät der Unterhaltungselektronik ausgebildet sein.

Die Aufgabe wird weiterhin durch ein Softwarepaket mit den Merkmalen des Anspruchs 11 gelöst. Die erfindungsgemäße Ausgestaltung besteht hierbei darin, dass das Softwarepaket als Einheit ausgebildet ist, die für alle intelligenten Einrichtungen des Gerätes jeweils dessen neues Programm enthält und zusätzlich eine Paketidentifikation und einen Paketversionsstand enthält. Vorzugsweise enthält das Softwarepaket weiterhin für jedes neue Programm eine jeweilige Programmidentifikation und/oder einen jeweiligen Programmversionsstand.

Weitere Vorteile und Einzelheiten ergeben sich aus der nachfolgenden Beschreibung von Ausführungsbeispielen in Verbindung mit den Zeichnungen. Es zeigen in Prinzipdarstellung
- Figur 1: schematisch ein Gerät,
- Figur 2: ein Ablaufdiagramm,
- Figur 3: ein Softwarepaket und
- Figuren 4 bis 7: Ablaufdiagramme.

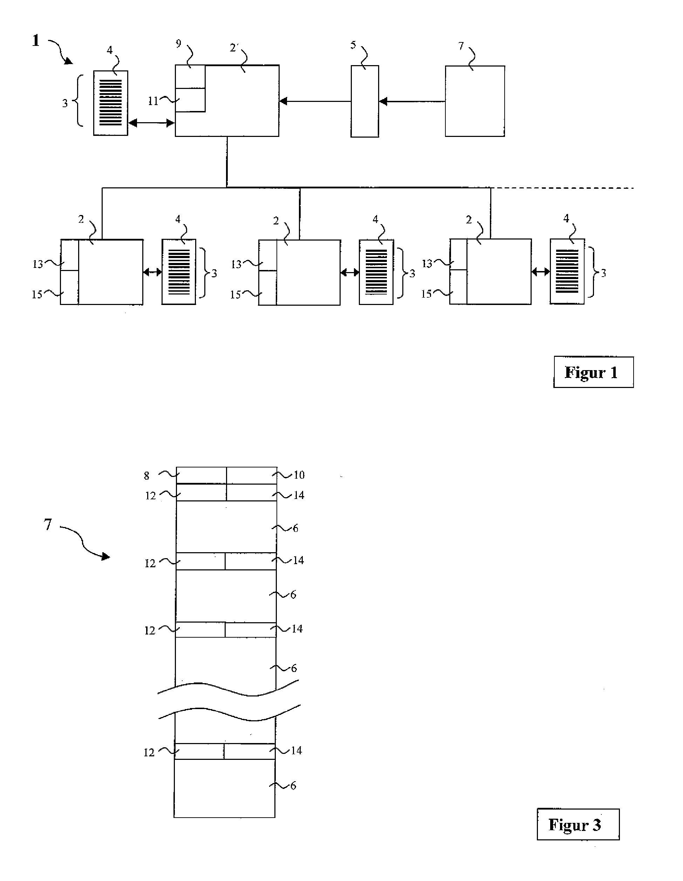

Gemäß Figur 1 weist ein Gerät 1 mehrere intelligente Einrichtungen 2 auf. Beispielsweise kann es sich bei dem Gerät 1 um ein Gerät der Unterhaltungselektronik handeln wie beispielsweise einen Fernseher, einen DVD-Recorder, einen Festplattenrecorder, einen Satellitenreceiver usw.. Die intelligenten Einrichtungen 2 führen im Betrieb des Gerätes 1 ihre jeweilige Funktionalität aus. Sie wirken hierbei miteinander zusammen.

Die intelligenten Einrichtungen 2 sind in der Regel als Mikroprozessoren oder Mikrocontroller ausgebildet. Jede intelligente Einrichtung 2 arbeitet programmgesteuert. Jede intelligente Einrichtung führt also ein jeweiliges Programm 3 aus, durch welches die jeweilige Funktionalität der jeweiligen intelligenten Einrichtung 2 bestimmt ist.

Für jede intelligente Einrichtung 2 ist deren jeweiliges Programm 3 in einem jeweiligen Festwertspeicher 4 hinterlegt. Der jeweilige Festwertspeicher 4 ist der jeweiligen intelligenten Einrichtung 2 zugeordnet. Er ist elektrisch lösch- und schreibbar. Beispielsweise können die Festwertspeicher 4 als Flash-EPROMs, als EEPROMs, als F-RAMs usw. ausgebildet sein. Die Festwertspeicher 4 können jeweils zusammen mit der zugehörigen intelligenten Einrichtung 2 auf demselben Chip angeordnet sein. Alternativ können sie als eigenständige elektronische Bauelemente ausgebildet sein.

Eine der intelligenten Einrichtungen 2 ist als Zugangseinrichtung ausgebildet, die mit einer Programmierschnittstelle 5 versehen ist. Diese intelligente Einrichtung 2 wird nachfolgend zur Unterscheidung von den anderen intelligenten Einrichtungen 2 mit dem Bezugszeichen 2' versehen. In der Regel handelt es sich bei der Zugangseinrichtung 2' um einen Hauptprozessor des Gerätes 1.

Über die Programmierschnittstelle 5 und die Zugangseinrichtung 2' sind den intelligenten Einrichtungen 2 neue Programme 6 zuführbar. Die neuen Programme 6 werden in diesem Fall anstelle der Programme 3 in die jeweiligen Festwertspeicher 4 eingespeichert. Die neuen Programme 6 verdrängen also die Programme 3.

Die Programmierschnittstelle 5 kann als separate, eigenständige Schnittstelle ausgebildet sein, beispielsweise als USB-Schnittstelle oder als serielle Schnittstelle gemäß dem RS 232-Standard. Alternativ kann es sich um eine Schnittstelle im weiteren Sinne handeln. Beispielsweise kann bei einem als Satellitenreceiver ausgebildeten Gerät 1 ein bestimmter Empfangskanal verwendet werden, um die neuen Programme 6 der Zugangseinrichtung 2' zuzuführen. Ebenso könnte die Schnittstelle 5 ein Internetzugang sein, mit dem auf einem Server zugegriffen werden kann, welcher einen Pool von Softwarepaketen 7 und für jedes Softwarepaket 7 eine Paketidentifikation 8 bereithält. Durch die Paketidentifikation 8 ist es möglich, das für das jeweilige Gerät 1 richtige Softwarepaket 7 zu identifizieren.

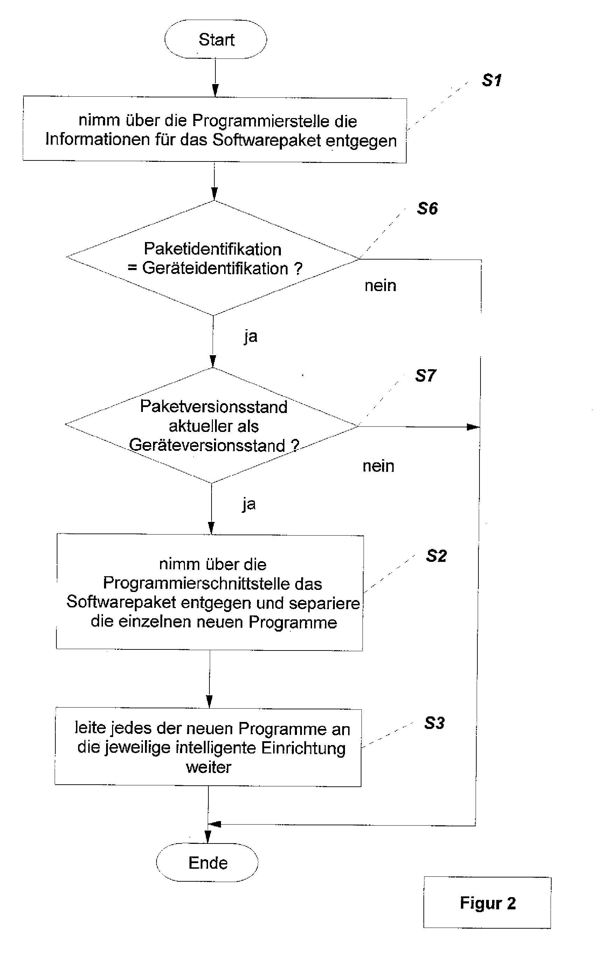

Das Zuführen der neuen Programme 6 geschieht gemäß Figur 2 wie folgt:

In einem Schritt S1 nimmt die Zugangseinrichtung 2' über die Programmierschnittstelle 5 die Informationen für das Softwarepaket 7 entgegen. Diese Informationen enthalten gemäß Figur 3 zumindest die Paketidentifikation 8 und einen Paketversionsstand 10. Anhand der Paketidentifikation 8 ist ermittelbar, für welches Gerät 1 das Softwarepaket 7 bestimmt ist.

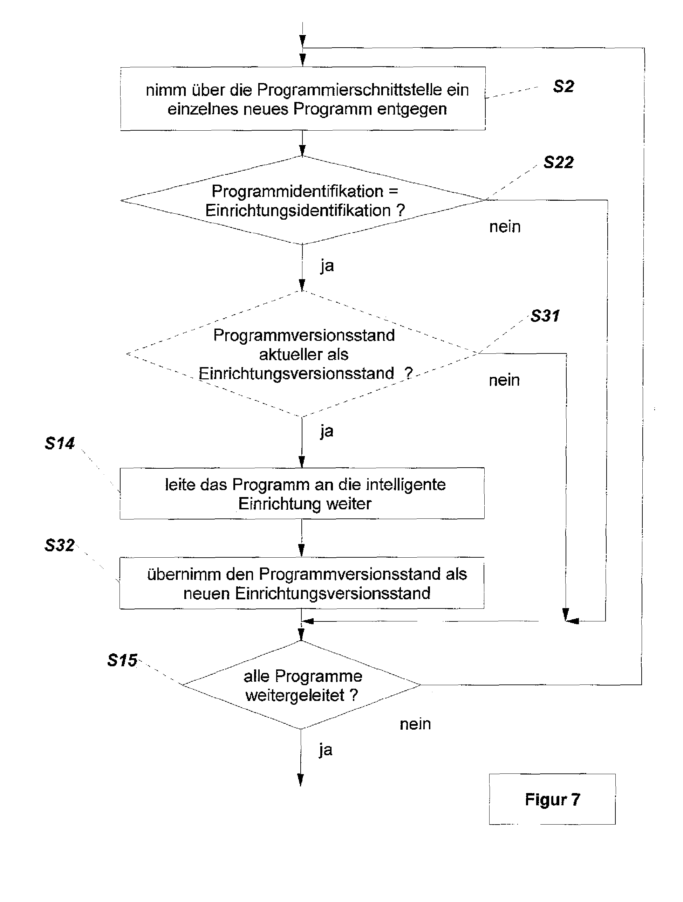

Das Softwarepaket 7 enthält weiterhin - siehe erneut Figur 3 - für alle intelligenten Einrichtungen 2 des Gerätes 1 jeweils dessen neues Programm 6. In einem Schritt S2 nimmt die Zugangseinrichtung 2' das Softwarepaket 7 entgegen. Im Schritt 2 kann alternativ entweder das ganze Softwarepaket 7 oder können einzelne Programme 6 über die Programmierschnittstelle 5 geladen werden. Es muss also nicht zwangsläufig das ganze Softwarepaket 7 in der Zugangseinrichtung 2' gespeichert werden, sondern die einzelnen Programme 6 können gegebenenfalls nacheinander über die Programmierschnittstelle 5 eingelesen und der jeweiligen intelligenten Einrichtung 2 zugeführt werden (siehe Figur 7). Die Zugangseinrichtung 2' separiert die einzelnen neuen Programme 6 voneinander. In einem Schritt S3 leitet die Zugangseinrichtung 2' jedes der neuen Programme 6 an die jeweilige intelligente Einrichtung 2 weiter.

Geräteintern ist in der Regel eine Geräteidentifikation 9 hinterlegt (siehe Figur 1). Anhand der Geräteidentifikation 9 ist ermittelbar, um welches Gerät 1 es sich tatsächlich handelt. In diesem Fall ist vor dem Schritt S3 von Figur 2 - vorzugsweise entsprechend der Darstellung in Figur 2 sogar vor dem Schritt S2 - ein Schritt S6 vorgesehen. Im Schritt S6 vergleicht die Zugangseinrichtung 2' die Paketidentifikation 8 und die Geräteidentifikation 9 miteinander. Nur im Falle der Übereinstimmung von Paketidentifikation 8 und Geräteidentifikation 9 führt die Zugangseinrichtung 2' den Schritt S3 und den Schritt S2 aus.

In der Regel ist geräteintern gemäß Figur 1 ein Geräteversionsstand 11 hinterlegt. In diesem Fall ist - analog zum Schritt S6 - vorzugsweise ein Schritt S7 vorhanden, in dem die Zugangseinrichtung 2' den Paketversionsstand 10 und den Geräteversionsstand 11 miteinander vergleicht. Nur wenn der Paketversionsstand 10 aktueller als der Geräteversionsstand 11 ist, wird der Schritt S3 (und gegebenenfalls auch der Schritt S2) ausgeführt.

In der Regel sind sowohl der Schritt S6 als auch der Schritt S7 vorhanden. In diesem Fall ist die Reihenfolge der Schritte S6 und S7 irrelevant. Prinzipiell ist jedoch auch möglich, dass nur einer der beiden Schritte S6 und S7 vorhanden ist.

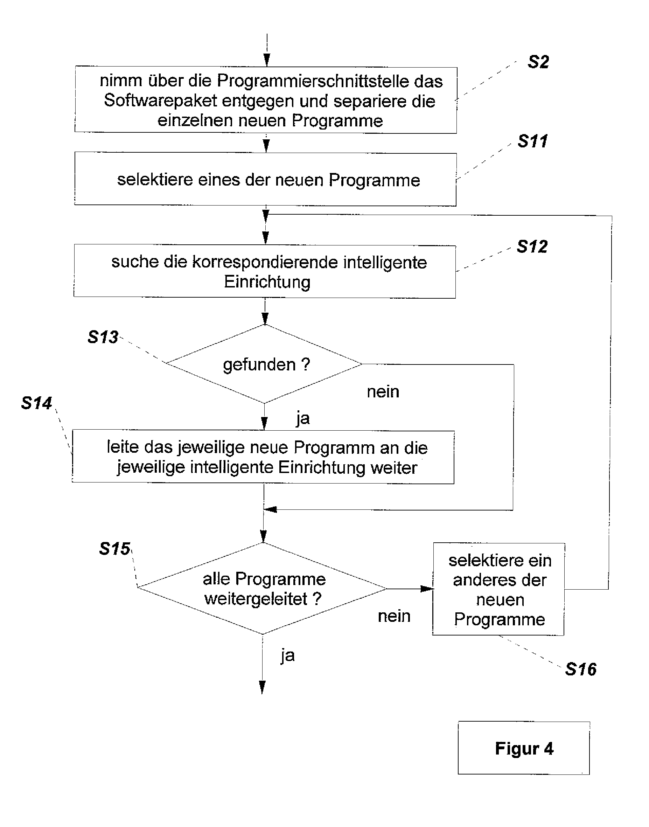

Es ist möglich, dass die Zugangseinrichtung 2' "weiß", welches neue Programm 6 für welche intelligente Einrichtung 2 bestimmt ist. Beispielsweise kann auf Grund der Reihenfolge der neuen Programme 6 die entsprechende Information gegeben sein. Im Regelfall enthält das Softwarepaket 7 für jedes neue Programm 6 entsprechend der Darstellung von Figur 3 eine Programmidentifikation 12. Anhand der Programmidentifikation 12 ist ermittelbar, um welches neue Programm 6 es sich handelt. Weiterhin ist in der Regel geräteintern für jede intelligente Einrichtung 2 - beispielsweise innerhalb der jeweiligen intelligenten Einrichtung 2 oder in einem der Zugangseinrichtung 2' zugänglichen Speicher - eine Einrichtungsidentifikation 13 hinterlegt. Anhand der Einrichtungsidentifikation 13 ist ermittelbar, welche Programme 6 für die jeweilige intelligente Einrichtung 2 geeignet sind. Es ist daher möglich, dass die Zugangseinrichtung 2' für jedes neue Programm 6 die Programmidentifikation 12 und die Einrichtungsidentifikation 13 auswertet und so ermittelt, welches der neuen Programme 6 für welche der intelligenten Einrichtungen 2 bestimmt ist. Auch kann die Zugangseinrichtung 2' gemäß Figur 4 prüfen, ob für ein bestimmtes neues Programm 6 überhaupt eine korrespondierende intelligente Einrichtung 2 vorhanden ist. Insbesondere kann auf diese Weise erreicht werden, dass die Zugangseinrichtung 2' das Weiterleiten des jeweiligen neuen Programms 6 an die jeweilige intelligente Einrichtung 2 nur bei Übereinstimmen der jeweiligen Programmidentifikation 12 mit der korrespondierenden Einrichtungsidentifikation 13 vornimmt. Die entsprechenden Schritte (Schritte S11 bis S16) von Figur 4 sind selbsterklärend.

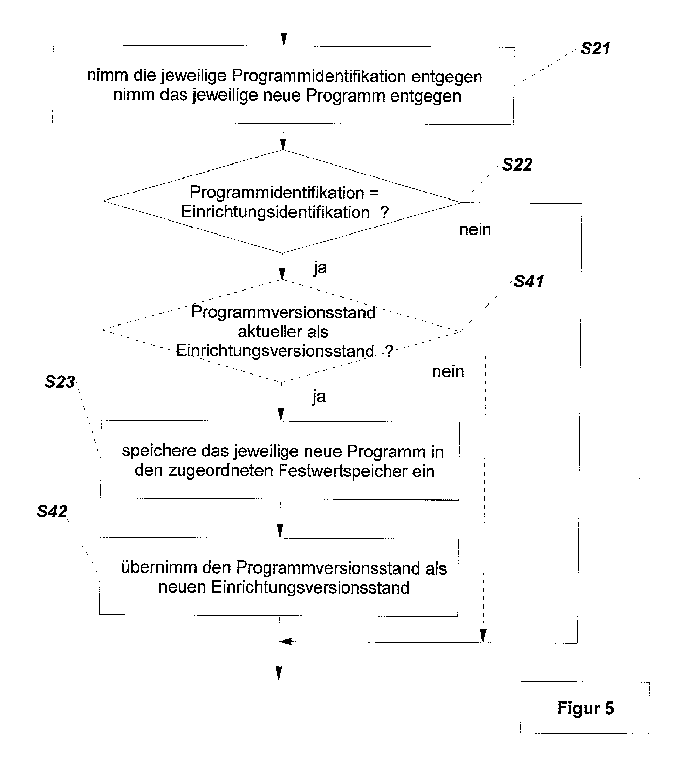

In dem Fall, dass die Zugangseinrichtung 2' vorab "weiß", welches der neuen Programme 6 für welche der intelligenten Einrichtungen 2 bestimmt ist, können die Schritte S12 und S13 entfallen. In diesem Fall können die intelligenten Einrichtungen 2 derart ausgebildet sein, dass sie zum Übernehmen des jeweiligen neuen Programms 6 eine Vorgehensweise gemäß Figur 5 ausführen.

Gemäß Figur 5 nehmen die intelligenten Einrichtungen 2 in einem Schritt S21 die jeweilige Programmidentifikation 12 entgegen. Das Entgegennehmen der Programmidentifikation 12 kann alternativ vor dem Entgegennehmen des zugehörigen neuen Programms 6 oder, wie in Figur 5 dargestellt, zusätzlich zum Entgegennehmen des zugehörigen neuen Programms 6 erfolgen.

In einem Schritt S22 vergleicht jede der intelligenten Einrichtungen 2 die an sie übermittelte Programmidentifikation 12 mit der ihr zugeordneten Einrichtungsidentifikation 13. Nur im Falle der Übereinstimmung wird ein Schritt S23 ausgeführt. Im Schritt S23 speichert die jeweilige intelligente Einrichtung 2 das für sie bestimmte jeweilige neue Programm 6 in den ihr zugeordneten Festwertspeicher 4 ein.

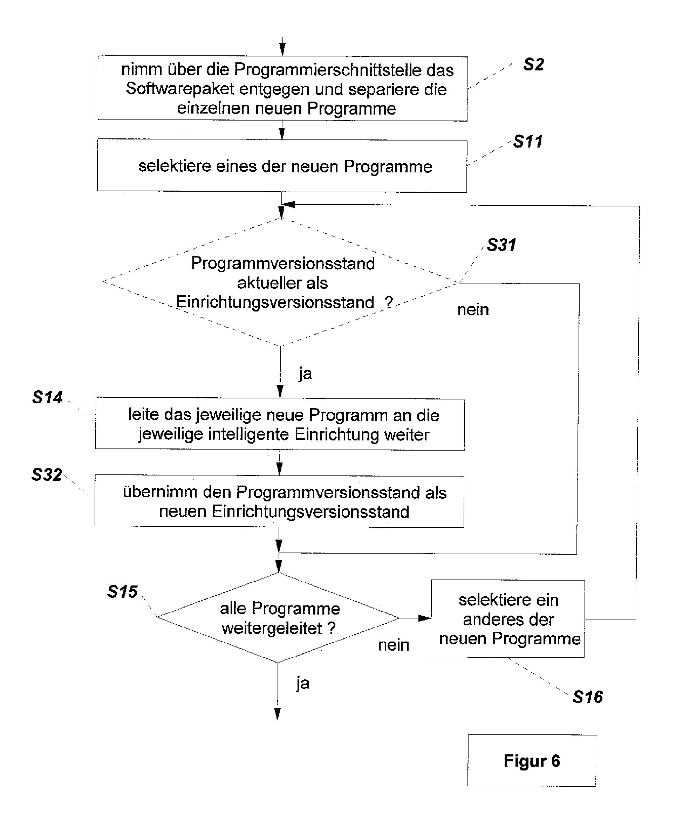

In analoger Weise kann das Softwarepaket 7 gemäß Figur 3 für jedes neue Programm 6 einen Programmversionsstand 14 enthalten. Auch kann geräteintern gemäß Figur 1 für jede intelligente Einrichtung 2 ein Einrichtungsversionsstand 15 hinterlegt sein. Es ist möglich, dass - siehe Figur 6 - die Zugangseinrichtung 2' in einem Schritt S31 für jedes neue Programm 6 den jeweiligen Programmversionsstand 14 mit dem korrespondierenden Einrichtungsversionsstand 15 vergleicht und das Weiterleiten des jeweiligen neuen Programms 6 an die jeweilige intelligente Einrichtung 2 nur dann vornimmt, wenn der jeweilige Programmversionsstand 14 aktueller als der korrespondierende Einrichtungsversionsstand 15 ist. In diesem Fall übernimmt die Zugangseinrichtung 2' in einem Schritt S32 weiterhin den jeweiligen Programmversionsstand 14 als neuen korrespondierenden Einrichtungsversionsstand 15. Der Einrichtungsversionsstand 15 wird also aktualisiert.

Vorzugsweise ist optional einstellbar, ob die Zugangseinrichtung 2' den Vergleich von Programmversionsstand 14 und Einrichtungsversionsstand 15 vornimmt oder nicht. Aus diesem Grund ist der entsprechende Schritt (Schritt S31) in Figur 6 nur gestrichelt eingezeichnet. Wenn der Schritt S31 nicht ausgeführt wird, erfolgt stets das Weiterleiten des jeweiligen neuen Programms 6 an die jeweilige intelligente Einrichtung 2 und das Übernehmen des jeweiligen Programmversionsstands 14 als neuen korrespondierenden Einrichtungsversionsstand 15.

Alternativ zum Vergleichen des Programmversionsstands 14 mit dem Einrichtungsversionsstand 15 durch die Zugangseinrichtung 2' ist es gemäß Figur 5 möglich, dass die intelligenten Einrichtungen 2 diese Überprüfung vornehmen. Dies ist in Figur 5 entsprechend dargestellt (Schritt S41). Analog zu der Ausgestaltung gemäß Figur 6 ist jedoch auch hier die entsprechende Überprüfung vorzugsweise nur optional. Aus diesem Grund ist der entsprechende Schritt (Schritt S41) in Figur 5 gestrichelt eingezeichnet. Das Übernehmen des Programmversionsstandes 14 als neuen Einrichtungsversionsstand 15 im Schritt S42 erfolgt - analog zum Schritt S32 von FIG 6 - bei Vorhandensein des Schrittes S41 konditional, anderenfalls stets.

Die vorliegende Erfindung weist viele Vorteile auf. Insbesondere ist sie einfach realisierbar, arbeitet zuverlässig und ist wirkungsvoll.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

### Bezugszeichenliste

- 1: Gerät
- 2: intelligente Einrichtungen
- 2': Zugangseinrichtung
- 3: Programme
- 4: Festwertspeicher
- 5: Programmierschnittstelle
- 6: neue Programme
- 7: Softwarepaket
- 8: Paketidentifikation
- 9: Geräteidentifikation
- 10: Paketversionsstand
- 11: Geräteversionsstand
- 12: Programmidentifikationen
- 13: Einrichtungsidentifikationen
- 14: Programmversionsstände
- 15: Einrichtungsversionsstände

- S1 bis S42: Schritte

## Patentansprüche

1. Gerät mit mehreren intelligenten Einrichtungen (2),
- wobei die intelligenten Einrichtungen (2) im Betrieb des Geräts ihre jeweilige Funktionalität ausführen und hierbei miteinander zusammenwirken,
- wobei für jede intelligente Einrichtung (2) deren Funktionalität durch ein jeweiliges Programm (3) bestimmt ist, das in einem der jeweiligen intelligenten Einrichtung (2) zugeordneten elektrisch lösch- und schreibbaren Festwertspeicher (4) hinterlegt ist,
- wobei eine der intelligenten Einrichtungen (2) als Zugangseinrichtung (2') ausgebildet ist, die mit einer Programmierschnittstelle (5) versehen ist, so dass den intelligenten Einrichtungen (2) über die Programmierschnittstelle (5) und die Zugangseinrichtung (2') neue Programme (6) zuführbar sind, welche anstelle der bereits in den Festwertspeichern (4) gespeicherten Programme (3) in die jeweiligen Festwertspeicher (4) eingespeichert werden,
**dadurch gekennzeichnet,**
**dass** die Zugangseinrichtung (2') derart ausgebildet ist, dass sie über die Programmierschnittstelle (5) als Einheit ein Softwarepaket (7) entgegen nimmt, welches für alle intelligenten Einrichtungen (2) des Geräts jeweils dessen neues Programm (6) enthält, die einzelnen neuen Programme (6) separiert und jedes der neuen Programme (6) an die jeweilige intelligente Einrichtung (2) weiterleitet.

2. Gerät nach Anspruch 1,
**dadurch gekennzeichnet,**
**dass** das Softwarepaket (7) eine Paketidentifikation (8) enthält, dass geräteintern eine Geräteidentifikation (9) hinterlegt ist und dass die Zugangseinrichtung (2') derart ausgebildet ist, dass sie die Paketidentifikation (8) mit der Geräteidentifikation (9) vergleicht und das Weiterleiten der einzelnen neuen Programme (6) nur bei Übereinstimmen der Paketidentifikation (8) mit der Geräteidentifikation (9) vornimmt.

3. Gerät nach Anspruch 1 oder 2,
**dadurch gekennzeichnet,**
**dass** das Softwarepaket (7) einen Paketversionsstand (10) enthält, dass geräteintern ein Geräteversionsstand (11) hinterlegt ist und dass die Zugangseinrichtung (2) derart ausgebildet ist, dass sie den Paketversionsstand (10) mit dem Geräteversionsstand (11) vergleicht und das Weiterleiten der einzelnen neuen Programme (6) nur dann vornimmt, wenn der Paketversionsstand (10) aktueller als der Geräteversionsstand (11) ist, und in diesem Fall weiterhin den Paketversionsstand (10) als neuen Geräteversionsstand (11) übernimmt.

4. Gerät nach Anspruch 1, 2 oder 3,
**dadurch gekennzeichnet,**
**dass** das Softwarepaket (7) für jedes neue Programm (6) eine Programmidentifikation (12) enthält, dass geräteintern für jede intelligente Einrichtung (2) eine Einrichtungsidentifikation (13) hinterlegt ist und dass die Zugangseinrichtung (2') derart ausgebildet ist, dass sie für jedes neue Programm (6) die Programmidentifikation (12) mit der korrespondierenden Einrichtungsidentifikation (13) vergleicht und das Weiterleiten des jeweiligen neuen Programms (6) an die jeweilige intelligente Einrichtung (2) nur bei Übereinstimmen der jeweiligen Programmidentifikation (12) mit der korrespondierenden Einrichtungsidentifikation (13) vornimmt.

5. Gerät nach Anspruch 1, 2 oder 3,
**dadurch gekennzeichnet,**
**dass** das Softwarepaket (7) für jedes neue Programm (6) eine Programmidentifikation (12) enthält, dass geräteintern für jede intelligente Einrichtung (2) eine Einrichtungsidentifikation (13) hinterlegt ist und dass die intelligenten Einrichtungen (2) derart ausgebildet sind, dass sie zusätzlich zu dem für sie bestimmten jeweiligen neuen Programm (6) oder vorab die jeweilige Programmidentifikation (12) entgegen nehmen und mit der ihnen jeweils zugeordneten Einrichtungsidentifikation (13) vergleichen und das für sie bestimmte jeweilige neue Programm (6) nur bei Übereinstimmen der jeweiligen Programmidentifikation (12) mit der ihnen jeweils zugeordneten Einrichtungsidentifikation (13) in den ihnen jeweils zugeordneten Festwertspeicher (4) einspeichern.

6. Gerät nach einem der Ansprüche 1 bis 5,
**dadurch gekennzeichnet,**
**dass** das Softwarepaket (7) für jedes neue Programm (6) einen Programmversionsstand (14) enthält, dass geräteintern für jede intelligente Einrichtung (2) ein Einrichtungsversionsstand (15) hinterlegt ist und dass die Zugangseinrichtung (2') derart ausgebildet ist, dass sie für jedes neue Programm (6) den jeweiligen Programmversionsstand (14) mit dem korrespondierenden Einrichtungsversionsstand (15) vergleicht und das Weiterleiten des jeweiligen neuen Programms (6) an die jeweilige intelligente Einrichtung (2) nur dann vornimmt, wenn der jeweilige Programmversionsstand (14) aktueller als der korrespondierende Einrichtungsversionsstand (15) ist, und in diesem Fall weiterhin den jeweiligen Programmversionsstand (14) als neuen korrespondierenden Einrichtungsversionsstand (15) übernimmt.

7. Gerät nach Anspruch 6,
**dadurch gekennzeichnet,**
**dass** die Zugangseinrichtung (2') derart ausgebildet ist, dass optional einstellbar ist, ob sie den jeweiligen Programmversionsstand (14) mit dem jeweils korrespondierenden Einrichtungsversionsstand (15) vergleicht oder ob sie das Weiterleiten des jeweiligen neuen Programms (6) an die jeweilige intelligente Einrichtung (2) und das Übernehmen des jeweiligen Programmversionsstands (14) stets vornimmt.

8. Gerät nach einem der Ansprüche 1 bis 5,
**dadurch gekennzeichnet,**
**dass** das Softwarepaket (7) für jedes neue Programm (6) einen Programmversionsstand (14) enthält, dass geräteintern für jede intelligente Einrichtung (2) ein Einrichtungsversionsstand (15) hinterlegt ist und dass die intelligenten Einrichtungen (2) derart ausgebildet sind, dass sie zusätzlich zu dem für sie bestimmten jeweiligen neuen Programm (6) oder vorab den jeweiligen Programmversionsstand (14) entgegen nehmen und mit dem jeweils korrespondierenden Einrichtungsversionsstand (15) vergleichen und das für sie bestimmte jeweilige neue Programm (6) nur dann in den ihnen jeweils zugeordneten Festwertspeicher (4) einspeichern, wenn der jeweilige Programmversionsstand (14) aktueller als der korrespondierende Einrichtungsversionsstand (15) ist, und in diesem Fall weiterhin den jeweiligen Programmversionsstand (14) als neuen korrespondierenden Einrichtungsversionsstand (15) übernehmen.

9. Gerät nach Anspruch 8,
**dadurch gekennzeichnet,**
**dass** die intelligenten Einrichtungen (2) derart ausgebildet sind, dass optional einstellbar ist, ob sie den jeweiligen Programmversionsstand (14) mit dem jeweils korrespondierenden Einrichtungsversionsstand (15) vergleichen oder ob sie das Einspeichern des jeweiligen neuen Programms (6) und das Übernehmen des jeweiligen Programmversionsstands (14) stets vornehmen.

10. Gerät nach einem der obigen Ansprüche,
**dadurch gekennzeichnet,**
**dass** es als Gerät der Unterhaltungselektronik ausgebildet ist.

11. Softwarepaket für ein Gerät (1) mit mehreren intelligenten Einrichtungen (2), die im Betrieb des Geräts (1) ihre jeweilige Funktionalität ausführen und hierbei miteinander zusammenwirken, wobei für jede intelligente Einrichtung (2) deren Funktionalität durch ein jeweiliges Programm (3) bestimmt ist,
- wobei das Softwarepaket als Einheit einer der intelligenten Einrichtungen (2), die als Zugangseinrichtung (2') ausgebildet ist, über eine Programmierschnittstelle (5) des Geräts (1) zuführbar ist,
- wobei das Softwarepaket für alle intelligenten Einrichtungen (2) des Geräts (1) jeweils dessen neues Programm (6) enthält,
- wobei das Softwarepaket eine Paketidentifikation (8) und einen Paketversionsstand (10) enthält.

12. Softwarepaket nach Anspruch 11,
**dadurch gekennzeichnet,**
**dass** es für jedes neue Programm (6) eine jeweilige Programmidentifikation (12) und/oder einen jeweiligen Programmversionsstand (14) enthält.
